# EUROPEAN PATENT APPLICATION

(11) **EP 4 249 432 A1**
(43) Date of publication of application: **27.09.2023**
(21) Application number: 21894242.3
(22) Date of filing: 04.06.2021
(51) Int. Cl.: C01B 33/16, F16L 59/02

(54) **METHOD FOR MANUFACTURING AEROGEL POWDER AND HEAT-INSULATING MATERIAL USING SAME**

(30) Priority: 20.11.2020 JP 2020193892
(71) Applicant: National Institute for Materials Science, Tsukuba-shi, Ibaraki 305-0047 (JP)
(72) Inventor: WU, Rudder, Tsukuba-shi, Ibaraki 305-0047 (JP); LEE, Kuan-I, Tsukuba-shi, Ibaraki 305-0047 (JP)
(74) Representative: Plougmann Vingtoft a/s
(86) International application number: PCT/JP2021/021300
(87) International publication number: WO 2022/107365

(57) **Abstract**

A manufacturing method of an aerogel powder of the present invention includes: a mixing process of mixing a silicon alkoxide (TEOS (tetraethoxysilane)) and a solvent (methanol) to form a sol on hydrolysis; a gelling process of gelling the sol obtained in the mixing process; an aging process of aging the gel obtained in the gelling process to obtain a wet gel (alkogel); a solvent exchanging process of replacing the solvent of the wet gel with a predetermined replacement solvent (hexane); a modifying process of modifying a surface of a network structure of the wet gel with a predetermined organic group using TMCS; a process of washing the modified wet gel obtained in the wet gel generating process; drying the washed and modified wet gel; and crushing the dried, washed and modified wet gel. It is possible to provide aerogel powder with reduced manufacturing cost per unit bulk volume and excellent in thermal insulation.

## Description

### TECHNICAL FIELD

The present invention relates to a thermal-insulating material using an aerogel and a manufacturing method of the aerogel. More particularly, the present invention relates to a manufacturing method of weakly bonded aerogel ultrafine particle, a manufacturing method of weakly bonded aerogel ultrafine particle hybridized with hollow particles, and a thermal-insulating material using these aerogel powders.

### Background Art

An aerogel is a material first published in 1931 (see NPL 1) and is generally defined as a gel that is microporous solid with its dispersed phase being gas.

As an aerogel is a material of extremely low density, putting it to practical use has involved difficulties due to its weakness, vulnerability and breakability. Therefore, mechanically strong new types of aerogels are in demand as novel filters in engineering applications for, for example, highly thermal insulation windows, ultra-thin walls for refrigerators, and highly thermal-insulating materials for buildings.

To solve this problem, studies have been made on hybridized aerogels reinforced with fibers or other organic molecules. For example, it has been proposed to modify a surface of a silica aerogel with an organic group and then natural-dry to produce a low-density structural porous material whose density is as low as that of an aerogel manufactured in supercritical drying.

Further, PTL 1 and PTL 2 propose an aerogel composite having not only thermal insulation performance but also flexibility.

However, no aerogel applicable to many practical use has been realized yet. Especially, aerogels manufactured by supercritical drying are expensive, which price factor is also a hindrance to the practical application.

On the other hand, storage and transport of low-temperature liquids of lower boiling temperatures such as liquid hydrogen and liquid helium are becoming more and more important, for liquid hydrogen has a boiling temperature of -252.8°C in comparison with liquid nitrogen of - 196°C.

Therefore, the advent of an aerogel suitable for storage and transport of low-temperature liquids such as liquid hydrogen and liquid helium is expected.

### CITATION LIST

### Patent Document

PTL 1: WO2017/170498
PTL 2: Japanese Patent No. 6288382

### Non-Patent Document

NPL 1: S.S. Kistler, Nature, Volume 127, pp. 741 (1931).

### SUMMARY OF THE INVENTION

### Problems to be Solved by the Invention

As described above, a silica-based aerogel, developed for many years, exhibits a porous structure and achieves ultra-low thermal conductivity compared to other thermal-insulating materials in the world.

However, there still is a problem that the greatest difficulty in application of an aerogel is its high manufacturing cost, which restricts the usage of the aerogel.

An objective of the present invention is to provide a method for weakly bonded aerogel ultrafine particle with lower manufacturing cost per unit bulk volume and higher thermal insulation performance, a method for manufacturing weakly bonded aerogel ultrafine particle hybridized with hollow particles, and a thermal-insulating material using these aerogel powders.

### Means for Solving Problems

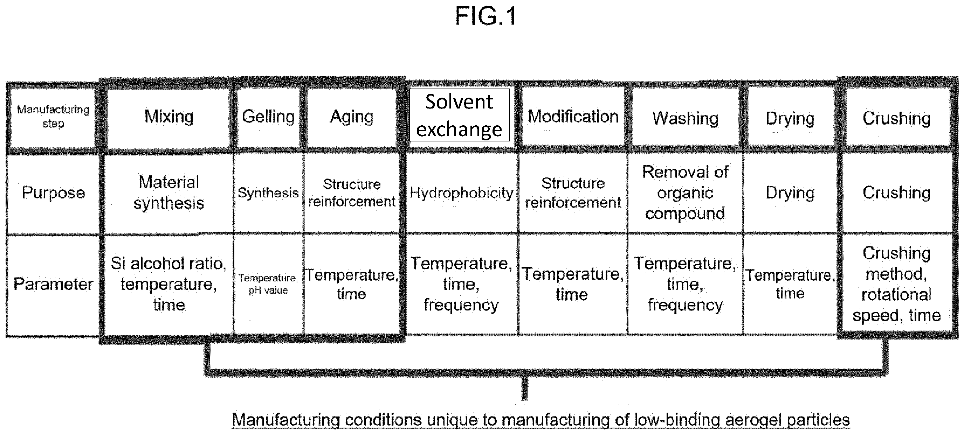

The present inventors have conceived that a very low density aerogel would reduce manufacturing cost as the bulk volume increases with the same weight, and have come to the present invention.
[1] A method for manufacturing weakly bonded aerogel ultrafine particle of the present invention includes, as illustrated in FIG. 1 for example, a mixing process of mixing a metal alkoxide with a solvent to form a sol on hydrolysis; a gelling process of gelling the sol obtained in the mixing process; an aging process of aging the gel obtained in the gelling process to obtain a wet gel; a solvent exchanging process of replacing the solvent of the wet gel with a predetermined replacement solvent, a modifying process of modifying a surface of a network structure with a predetermined organic group; a process of washing the modified wet gel obtained in the wet gel generating process; a process of drying the washed and modified wet gel; and a process of crushing the dried wet gel.
[2] In the method for manufacturing weakly bonded aerogel ultrafine particle of the present invention, it is desirable that the metal of the metal alkoxide may include at least one of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).
[3] In the method for manufacturing weakly bonded aerogel ultrafine particle of the present invention, it is desirable that the metal alkoxide may be a silicon alkoxide.
[4] In the method [3] for manufacturing weakly bonded aerogel ultrafine particle of the present invention, it is desirable that at least one of tetraethoxysilane, trimethoxysilane, tetramethoxysilane, triethoxysilane, tripropoxysilane, tetrapropoxysilane and tributoxysilane may be used as the silicon alkoxide.
[5] In the method [3] for manufacturing weakly bonded aerogel ultrafine particle of the present invention, it is desirable that in the mixing process, the ratio of the silicon alkoxide and the solvent may be in a predetermined range. In the mixing process, in order to promote the hydrolysis reaction, an acid catalyst may be added to the solvent.
[6] In the method [3] for manufacturing weakly bonded aerogel ultrafine particle of the present invention, it is desirable that in the gelling process, an acid catalyst and a base catalyst may be added to a mixture of the silicon alkoxide and the solvent.
[7] In the method [3] for manufacturing weakly bonded aerogel ultrafine particle of the present invention, it is desirable that in the aging process, the aging temperature may be 15°C or higher and 70°C or lower, and the aging time may be longer than 0 hours and 24 hours or shorter.
[8] In the method [3] for manufacturing weakly bonded aerogel ultrafine particle of the present invention, it is desirable that in the modifying process, the reactive group to modify the surface of the network structure with an organic group may include one or two or more of halogen, amino group, imino group, carboxyl group, alkoxy group, hydroxyl group, alkyl group, phenyl group, a fluoride of alkyl group, and fluoride of phenyl group.
[9] In the method [8] for manufacturing weakly bonded aerogel ultrafine particle of the present invention, it is desirable that in the modifying process, the compound to be added as a reagent having the reactive group may be hexamethyldisilazane, hexamethyldisiloxane, trimethylchlorosilane, trimethylmethoxysilane, trimethylethoxysilane, triethylethoxysilane, triethylmethoxysilane, dimethyldichlorosilane, dimethyldiethoxysilane, methyltrichlorosilane, ethyltrichlorosilane, acetic acid, formic acid, succinic acid, and methyl chloride.
[10] In the method [9] for manufacturing weakly bonded aerogel ultrafine particle of the present invention, it is desirable that in the washing process of the wet gel, the wet gel that has been subject to the modifying process may be washed with the washing liquid so as to remove the reagent having the reactive group from the gel.
[11] In the method [3] for manufacturing weakly bonded aerogel ultrafine particle of the present invention, it is desirable that the drying process may be conducted at the atmospheric pressure.
[12] In the method [3] for manufacturing weakly bonded aerogel ultrafine particle of the present invention, it is desirable that in the crushing process, in the weakly bonded aerogel, the aerogel dried in the method described in [11] may be crushed so that the aerogel particles in which the primary particles are framework units are included at 50% or more and the rest is the aerogel particles in which the secondary particles are framework units.
[13] In the method [3] for manufacturing weakly bonded aerogel ultrafine particle of the present invention, it is desirable that the solvent in the mixing process may be at least one of methanol, ethanol, n-propanol, 2-propanol, n-butanol, 2-butanol, and t-butanol.
[14] In the method [3] for manufacturing weakly bonded aerogel ultrafine particle of the present invention, it is desirable that as a solvent for replacement, at least one of organic solvents, methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid, and formic acid may be used alone or in mixture of two or more thereof.
[15] A method for manufacturing weakly bonded aerogel ultrafine particle hybridized with hollow particles is, in the method for manufacturing weakly bonded aerogel ultrafine particle described in [1] or [2], further including, between the mixing process and the gelling process, a process of adding hollow particles to the mixture of the metal alkoxide and the solvent in the mixing process.
[16] A method for manufacturing weakly bonded aerogel ultrafine particle hybridized with hollow particles is, in the method for manufacturing weakly bonded aerogel ultrafine particle described in any one of [3] to [14], further including a process of adding hollow particles to the mixture of the silicon alkoxide and the solvent prepared as a silica precursor in the mixing process.
[17] In the method [15] or [16] for manufacturing weakly bonded aerogel ultrafine particle hybridized with hollow particles of the present invention, it is desirable that the hollow particles may include at least one of nano-size hollow particles with an outer diameter of 30 nm or more and 360 nm or less, and a spherical shell thickness of 7.5 nm or more and 65 nm or less, and micro-size hollow particles with an outer diameter of 1 µm or more and 23 µm or less, and a spherical shell thickness of in the range of 0.35 µm or more and 3µm or less.
[18] In the method [17] for manufacturing weakly bonded aerogel ultrafine particle powder hybridized with hollow particles of the present invention, it is desirable that the amount of nano-size hollow particles to add may be from 0.01% to 30% by weight relative to the entire hybridized aerogel.
[19] In the method [17] for manufacturing weakly bonded aerogel ultrafine particle hybridized with hollow particles of the present invention, it is desirable that the amount of micro-size hollow particles to add may be from 0.01% to 30% by weight relative to the entire hybridized aerogel.
[20] The thermal-insulating material of the present invention is characterized by that the thermal-insulating material is made from an aerogel having a three-dimensional network structure with a framework constituted by a cluster of aggregation of primary particles; and the thermal-insulating material comprises fine particles having a three-dimensional network structure with a framework of the primary particles. Here the primary particles will be described. In the three-dimensional network structure of the related art aerogel powder particles, the units constituting the framework are called secondary particles (see, for example, PTL1 paragraph 0033). The primary particle is a particle of smaller unit, a plurality of which aggregate to constitute the secondary particle. According to PTL1, the diameter of a secondary particle is approximately 2 nm to 50 µm, while the diameter of a primary particles is 0.1 nm to 5 µm. However, no particular range is defined to the absolute values for the particle size of the primary particle or the and the secondary particles as common general knowledge.
[21] In the thermal-insulating material [20] of the present invention, it is desirable that the aerogel may be a three-dimensional network structure whose framework is constituted by the primary particles of metal oxide, and metal of the metal oxide may be an oxide of at least one of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).
[22] In the thermal-insulating material [20] or [21] of the present invention, it is desirable that50% or more of the total number of the fine particles may be dispersed with a mode value at the particle size of 0.1µm or more and 1.0µm or less. Note that the particle size referred here is the observed value by a laser diffraction type particle size distribution measurement device. Laser diffraction particle size distribution measurement is abbreviated as PSD (particle size distribution) measurement in this specification. Particle size will be explained herein under PSD measurement. However, in the PSD measurement, not only the diameter of the particles themselves but aggregation of the particles are observed as the particle size, so the true particle size is likely to be smaller than the measured value. If there is a difference in particle size depending on the measurement method, the particle size may be converted and read accordingly.
[23] In the thermal-insulating material [20] to [22] of the present invention, it is desirable that the thermal-insulating material may further include hollow particles.
[24] In the thermal-insulating material [23] of the present invention, it is desirable that the hollow particles may include at least one of nano-size hollow particles of 30 nm or more and 360 nm or less in outer diameter and micro-size hollow particles of 1 µm or more and 23 µm or less in outer diameter.
[25] In the thermal-insulating material [23] or [24] of the present invention, it is desirable that the hollow particle may have a shell and gas of thermal conductivity lower than that of air may be enclosed in a hollow portion inside the shell.

### Effect of the Invention

According to the method for manufacturing weakly bonded aerogel ultrafine particle of the present invention, it is possible to provide ultrafine particle aerogel powder with increased bulk volume of aerogel powder. Ultrafine particle aerogel powder with increased powder volume can be filled into a greater volume with the same weight, reducing the material cost of the thermal-insulating material.

According to the method for manufacturing weakly bonded aerogel ultrafine particle hybridized with hollow particles of the present invention, it is possible to provide ultrafine particle aerogel powder containing hollow particles. Ultrafine particle aerogel powder containing hollow particles can be filled into a greater volume with the same weight, reducing the material cost of the thermal-insulating material.

According to the thermal-insulating material of the present invention, since ultrafine particle aerogel powder or weakly bonded aerogel ultrafine particle hybridized with hollow particles is used, the powder size is smaller than that of related art aerogels, allowing to increase the unit bulk volume of the aerogel material.

### BRIEF DESCRIPTION OF THE DRAWINGS

FIG. 1 is a manufacturing process diagram illustrating an example of a synthesis process of an aerogel, illustrating a synthesis process of weakly bonded aerogel ultrafine particle.
FIG. 2 is an explanatory diagram of a sequence of a high-speed crushing process.
FIG. 3 is an explanatory diagram schematically illustrating a structure of a general aerogel and aerogel powder manufactured by crushing the structure.
FIG. 4 is an explanatory diagram schematically illustrating an aerogel of the present invention and ultrafine particle aerogel powder manufactured by crushing the aerogel.
FIG. 5 shows SEM images of a commercially available aerogel and weakly bonded aerogel ultrafine particle.
FIG. 6 illustrates particle size distribution of a commercially available aerogel and weakly bonded aerogel ultrafine particle.
FIG. 7 is an external view of weakly bonded aerogel ultrafine particle according to an embodiment of the present invention.
FIG. 8 illustrates thermal conductivity of a commercially available aerogel and weakly bonded aerogel ultrafine particle.
FIG. 9 illustrates a difference in density of aerogel powder in various crushing mechanisms.
FIG. 10 illustrates numerical data of particle size distribution data of weakly bonded aerogel ultrafine particle according to an embodiment of the present invention.

### DETAILED DESCRIPTION OF THE INVENTION

### <Definition>

In the present specification, a numerical range defined using "~" is a range that includes the numerical values on both sides of "~" as the minimum and maximum values. In the numerical range described stepwise herein, the upper or lower limit value of the numerical range of one step may be replaced by the upper or lower limit value of the numerical range of the other step. In the numerical range described herein, the upper or lower limit of the numerical range may be replaced by the values given in the examples. "A or B" may include either A or B, or may include both. The materials exemplified herein may be used alone or in mixture of two or more thereof unless otherwise indicated. When there are more than one substances corresponding to each component in the composition, the content of each component in the composition herein is the total amount of a plurality of substances present in the composition unless otherwise indicated.

### <Aerogel>

In a narrow sense, a dry gel obtained by supercritical drying to a wet gel is referred to as an aerogel, a dry gel obtained by drying at the atmospheric pressure is referred to as a xerogel, and a dry gel obtained by freeze drying is referred to as a cryogel. In the present embodiment, however, low-density dry gels obtained by drying wet gels by any of the above drying methods will be referred to as an aerogel. Therefore, an aerogel in the present embodiment refers to "a gel comprised of a microporous solid in which the dispersed phase is a gas," as an aerogel in a broad sense.

### <Aerogel Powder>

Aerogel powder is powder of crushed aerogel.

Hereinafter, a description will be given of each process of the method for manufacturing the weakly bonded aerogel ultrafine particle of the present embodiment.

FIG. 1 is a manufacturing process diagram illustrating an example of a synthesis process of an aerogel, illustrating a synthesis process of weakly bonded aerogel ultrafine particle. The synthetic process of the weakly bonded aerogel ultrafine particle includes a mixing process, a gelling process, an aging process, a solvent exchanging process, a modifying process, a washing process, and a crushing process. Here, the silica aerogel is manufactured through two main processes: formation of a wet gel by sol-gel chemistry and drying of the wet gel. The wet gel is composed of a three-dimensional network framework and a liquid solvent. The three-dimensional network framework has a silica nanostructure formed by hydrolysis and condensation of silica precursor molecules.

By controlling parameters in the aging process and the crushing process, the volume of the aerogel powder can be increased.

### (Mixing Process)

In the mixing process, a metal alkoxide (e.g., silicon alkoxide) and a solvent are mixed to form sol on hydrolysis. In the mixing process, an acid catalyst may be added to the solvent to promote a hydrolysis reaction. In the case of a method for manufacturing weakly bonded aerogel ultrafine particle hybridized with hollow particles, a metal alkoxide (e.g., silicon alkoxide) and a solvent containing hollow particles are mixed and hydrolyzed to produce sol.

The metal alkoxide may contain, as a metal element, at least one of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).

The silicon alkoxide may contain at least one of a hydrolyzable functional group and a condensable functional group, or may contain both a hydrolyzable functional group and a condensable functional group. As the silicon alkoxide, at least one of tetraethoxysilane, trimethoxysilane, tetramethoxysilane, triethoxysilane, tripropoxysilane, tetrapropoxysilane and tributoxysilane may be used for example.

Examples of the hydrolytic functional groups may include alkoxy groups. Examples of condensable functional groups (except for functional groups correspond to hydrolyzable functional groups) may include hydroxyl groups, silanol groups, carboxyl groups, and phenolic hydroxyl groups. The hydroxyl group may be included in the hydroxyl group-containing groups such as hydroxyalkyl groups. Each of the hydrolyzable and condensable functional groups may be used alone or in mixture of two or more thereof.

As an example of the solvent, water, or a mixture of water and alcohols may be used. Alcohols may include methanol, ethanol, n-propanol, 2-propanol, n-butanol, 2-butanol, and t-butanol. Among these, as alcohols having low surface tension and low boiling point, methanol, ethanol, 2-propanol, etc. are named in terms of reducing interfacial tension with gel walls. These alcohols may be used alone or in mixture of two or more thereof.

The weight ratio of the solvent to silicon alkoxide may be, for example, 1 to 1.5.

Examples of base catalysts may include lithium hydroxide, sodium hydroxide, potassium hydroxide, alkali metal hydroxides such as cesium hydroxide, and ammonium hydroxide. Among these, ammonium hydroxide (ammonia water) is excellent for it is highly volatile, less easily remain in the aerogel after drying and thus less easily impair water resistance, and moreover, excellent in terms of economic efficiency. The above base catalyst may be used alone or by mixing two or more thereof.

Acid catalysts may include inorganic acids such as hydrofluoric acid, hydrochloric acid, nitric acid, sulfuric acid, sulfurous acid, phosphoric acid, phosphorus acid, hypophosphoric acid, bromic acid, chloric acid, chlorous acid, and hypochlorous acid; acidic phosphates such as acidic aluminum phosphate, acidic magnesium phosphate, and acidic zinc phosphate; and organic carboxylic acids such as acetic acid, formic acid, propionic acid, oxalic acid, malonic acid, succinic acid, citric acid, malic acid, adipic acid, and azelaic acid. Among these, organic carboxylic acids are named as acid catalysts that improve water resistance of the resulting aerogel complex. Such organic carboxylic acids may include acetic acid, but may also be formic acid, propionic acid, oxalic acid, malonic acid, and the like. These may be used alone or by mixing two or more thereof.

The case of the method for manufacturing weakly bonded aerogel ultrafine particle hybridized with hollow particles will be described in detail later.

### (Gelling Process)

In the gelling process, the sol obtained in the mixing process is subject to gelling and then aging to obtain a wet gel. In this process, a base catalyst may be used to promote gelling.

Examples of base catalysts may include lithium hydroxide, sodium hydroxide, potassium hydroxide, alkali metal hydroxides such as cesium hydroxide, and ammonium hydroxide. Among these, ammonium hydroxide (ammonia water) is excellent for it is highly volatile, less easily remain in the aerogel after drying, and moreover, excellent in terms of economic efficiency. The above base catalyst may be used alone or by mixing two or more thereof.

The use of base catalysts can facilitate dehydration and condensation reactions of metal alkoxides or dealcohol condensation reactions in sols, reducing time for gelling of sols. In particular, weakly bonded aerogel can be easily obtained by using ammonia as a base catalyst.

### (Aging Process)

The aging process may be conducted in a sealed container to prevent volatilization of the solvent and the base catalyst. Aging can enhance the bond between components of the wet gel, resulting in a wet gel with the strength enough to prevent shrinkage during drying.

Table 1 shows the conditions of the manufacturing process of the weakly bonded aerogel according to an embodiment of the present invention, defining the range of variables in the aging process.

As shown in Table 1, the aging temperature may be, for example, 15°C or higher and 70°C or lower, preferably 20°C to 70°C, and more preferably 25°C to 60°C. By setting the aging temperature to 15°C or higher, it is possible to obtain a wet gel of higher strength, and by setting the aging temperature to 70°C or lower, the gel can be aged with suppressed volume shrinkage as volatilization of the solvent (especially alcohols) can be suppressed easily.

**Table 1**

| | OPTIMUM RANGE | | AVERAGE RANGE | | WIDE RANGE | |
|---|---|---|---|---|---|---|
| | MAXIMUM VALUE | MINIMUM VALUE | MAXIMUM VALUE | MINIMUM VALUE | MAXIMUM VALUE | MINIMUM VALUE |
| AGING TEMPERATURE [°C] | 25 | 60 | 20 | 70 | 15 | 70 |
| AGING TIME [HR] | 1 | 3 | 1[SEC] | 12 | 1[SEC] | 24 |

The aging time varies with the aging temperature. In the case of the manufacturing method of weakly bonded aerogel ultrafine particle hybridized with hollow particles, the aging time can be particularly shortened in comparison with the related art methods for manufacturing aerogels since hollow particles are contained in the sol.

The aging time may be, for example, from 1 second to 24 hours, preferably from 1 second to 12 hours, and more preferably from 1 to 3 hours. With the aging time of 1 second to 3 hours, a weakly bonded wet gel is easily obtained, while with the aging time of 3 to 24 hours, a higher-binding wet gel is easily obtained.

In order to increase the density or the bond strength of the resulting aerogel, the aging temperature may be increased within the above range or the aging time may be extended within the above range in the aging process. On the other hand, in order to reduce the density or the bond strength of the resulting aerogel complex, the aging temperature may be lowered within the above range, or the aging time may be shortened within the above range.

### (Solvent Exchanging Process)

In the solvent exchanging process, the solvent of the wet gel is replaced with a predetermined replacement solvent. Heating can improve efficiency in replacement. As the solvent for replacement, specifically, a solvent of low surface tension is used when drying is conducted at a temperature below the critical point of the solvent used for drying at the atmospheric pressure in the drying process.

In the solvent exchanging process, a solvent of low surface tension can be used. A solvent of low surface tension generally has very low solubility with water. Therefore, when a solvent of low surface tension is used in the solvent exchanging process, various types of organic solvents like methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid, and formic acid can be used. The above organic solvent may be used alone or in mixture of two or more thereof.

The organic solvent may also be a hydrophilic organic solvent having high solubility with both water and a low surface tension solvent. Examples of the hydrophilic organic solvents may include methanol, ethanol, 2-propanol, acetone, and methyl ethyl ketone. For economic reasons, methanol, ethanol or methyl ethyl ketone may be used.

### (Modifying Process)

In the modifying process, the surface of the network structure is modified with an organic group to make a low density porous material by utilizing the repulsive force between the organic groups after drying. Examples of organic compounds used in the modifying process may include TMCS (trimethylchlorosilane). Details of the modifying process are described, for example, in Koji Tajiri, Research on Preparation and Structure, and Evaluation of Thermal and Mechanical Properties of Silica Aerogel and Modifier Thereof, Ph.D. Thesis of Nagoya Institute of Technology (2002), pp.56-pp.73.

Reactive groups for modifying the surface of the network structure with organic groups are preferably those that fall under hydrolyzable and condensable functional groups, but are not limited thereto. Reactive groups in a silicon alkoxide having a hydrolyzable functional group or a condensable functional group that further has a reactive group different from a hydrolyzable functional group or a condensable functional group (i.e. reactive groups not corresponding to hydrolyzable functional groups and non-condensable functional groups) may be used as well. Examples may include epoxy groups, mercapto groups, glycidoxy groups, vinyl groups, acryloyl groups, methacryloyl groups, and amino groups. Epoxy groups may be included in epoxy group-containing groups such as glycidoxy groups.

Reactive groups to modify the surface of the network structure with organic groups may include, for example, halogen, amino group, imino group, carboxyl group, alkoxy group, hydroxyl group, alkyl group, phenyl group, fluoride of alkyl group, and fluoride of phenyl group. These reactive groups may be included alone or in combination of two or more thereof.

Specific examples of the reactive groups may include organic silane compounds such as hexamethyldisilazane, hexamethyldisiloxane, trimethylchlorosilane, trimethylmethoxysilane, trimethylethoxysilane, triethylmethoxysilane, triethylmethoxysilane, dimethyldichlorosilane, dimethyldiethoxysilane, methyltrichlorosilane, and ethyltrichlorosilane. Further, organic compounds like carboxylic acid such as acetic acid, formic acid, and succinic acid, and alkyl halide such as methyl chloride may also be used.

### (Washing Process)

In the washing process, the wet gel obtained in the wet gel forming process is washed. The washing may be conducted repeatedly with water or an organic solvent, for example. Heating can improve efficiency in washing.

Various types of organic solvents like methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid, and formic acid can be used. The above organic solvent may be used alone or in mixture of two or more thereof.

The amount of water or the organic solvent used in the washing process may be set to be an amount enough to replace and wash the solvent in the wet gel.

The temperature environment in the washing process may be a temperature below the boiling point of the solvent used for washing. For example, when hexane is used, hexane may be heated to about 30°C to 60°C.

### (Drying Process)

In the drying process, the above-described washed and solvent-replaced (as necessary) wet gel is dried. This results in a weakly bonded aerogel.

The drying method is not particularly limited, and known ambient drying, supercritical drying or freeze drying may be used. Among these, ambient drying or supercritical drying may be used in view of easy manufacturing of low-density weakly bonded aerogels. Ambient drying may be used in view of low cost manufacturing. Note that the ambient pressure designates 0.1 MPa (the atmospheric pressure) in the present embodiment.

The aerogel according to the present embodiment can be obtained by drying a solvent-replaced, washed wet gel at a temperature below the critical point of the solvent used for the drying at the atmospheric pressure. The drying temperature depends on the type of the solvent exchanged. There is a possibility that if the solvent is dried at high temperatures, an increased evaporation rate of the solvent can cause a big crack in the gel. Therefore, the drying temperature can be increased stepwise from 40°C to 150°C and may be between 40°C and 120°C. The drying time, which depends on the volume of the wet gel and the drying temperature, can be 4 to 36 hours. Note that in the present embodiment, to accelerate drying by applying a pressure below the critical point within a range not inhibiting productivity is included in the ambient drying.

### (Crushing Process)

In the crushing process, the dried aerogel is crushed to destroy the secondary particle structure and mechanically reduce into a primary particle structure. In the crushing process, a crusher is desirably used.

The crusher performs a unit operation for crushing solid materials into small pieces, and there are many types of crushers. Examples thereof may include a mill and a crusher.

The crusher crushes particles with a rotating blade. The blade rotates at varying rotational speeds: a high speed and a low speed. At a high speed, the crusher can crush particles into smaller particles with smaller diameter. At a low speed, the crusher is suitable for crushing rigidly binding particles. A dried aerogel has low thermal conductivity and it is highly probable that the temperature of the dried aerogel would become high due to the heat generated by crushing. Therefore, a water-cooling mechanism is desirably provided in the crusher.

Examples of mills may include a bead mill, a ball mill, and a rod mill.

A bead mill is a medium stir crusher which nanodisperses and finely crushes the powder using beads. A slurry and beads (media) are placed in a crushing chamber (vessel), which is rotated at a high speed by a stirring mechanism to give energy to the beads by the centrifugal force, crushing particles by slip stress, shear stress, frictional force, and impact force. In this manner, powder of the size of about 100 µm to 150 µm can be crushed to 1 µm to a few µm. Thus, microparticulation into a few nm can be realized by using microbeads.

A ball mill is a representative as a crusher for obtaining fine particles. In a ball mill, balls, usually made of sand or metal, are filled in a cylinder rotating horizontally or at a small angle thereto. The ball mill crushes a material by collision or abrasion with the balls. The material to be crushed is put from one side of the cylinder, and the crushed material is discharged from the other side.

A rod mill uses rods (metal cylinders) as crushing media instead of balls. A material is crushed when a rotating drum (shell) provides crushing impact on the material. With the rod mill, materials are less likely to be overcrushed than in the ball mill, providing products of relatively uniform grain size.

Table 2 shows an example of the conditions of the manufacturing process of the weakly bonded aerogel according to an embodiment of the present invention. Here, a variable range in the crushing process is defined in a case in which a Wonder Crusher WC-3 from Osaka Chemical Co., Ltd. is used as a crusher.

As shown in Table 2, the rotational speed of the crushing blade of the crusher as a variable range in the crushing process is preferably 10000 rpm to 28000 rpm, more preferably 10000 rpm to 25000 rpm, and most preferably 11000 rpm to 22000 rpm. The crushing time is preferably 1 minute to 120 minutes, more preferably 3 minutes to 60 minutes, and most preferably 5 minutes to 45 minutes.

**Table 2**

| | OPTIMUM RANGE | | AVERAGE RANGE | | WIDE RANGE | |
|---|---|---|---|---|---|---|
| | MAXIMUM VALUE | MINIMUM VALUE | MAXIMUM VALUE | MINIMUM VALUE | MAXIMUM VALUE | MINIMUM VALUE |
| CRUSHING ROTATION SPEED [RPM] | 11,000 | 22,000 | 10,000 | 25,000 | 10,000 | 28,000 |
| CRUSHING TIME [MIN] | 5 | 45 | 3 | 60 | 1 | 120 |

### Examples

### First Embodiment

### < Weakly Bonded Aerogel Ultrafine Particle >

Referring again to the manufacturing process diagram illustrated in FIG. 1, the present embodiment will be described.

The silica aerogel is manufactured mainly in the following two steps: the step of forming a wet gel in the sol-gel method; and the step of drying the wet gel. The wet gel consists of a network of nanostructured solid silica and a liquid solvent, and is manufactured by hydrolysis and condensation of silica precursor molecules. This silica precursor is manufactured by mixing TEOS (tetraethoxysilane) with methanol (mixing process).

In addition, a total of 6.3 g of oxalic acid (0.01 M) is added to the mixture, and finally 1.5 g of ammonium hydroxide (NH₄OH 0.5 M) is added to form an alkosol. The alkosol becomes a gel when left at room temperature (gelling process).

Following gelling, the alkogel was aged in methanol at 60°C for 3 hours, 6 hours and 12 hours, respectively (aging process). An excess amount of methanol may be added to the gel to prevent evaporation of the whole methanol in the aging process. The excess amount of methanol added may be determined considering the amount of methanol to evaporate during the aging process, the aging temperature, and the aging time.

In the solvent exchanging process, the alkogel was immersed in hexane at 60°C for 10 hours to avoid the reverse reaction of surface modification, and the hexane-only solvent was replaced with a mixture of hexane and TMCS (trimethylchlorosilane) to modify the surface. The volume ratio of hexane to TMCS was kept at a constant value of 4. In the modifying process, the alkogel was immersed in a mixture of hexane and TMCS at 60°C for 24 hours (modifying process). Before drying the alkogel, the sample was immersed in pure hexane at 60°C for 6 hours to remove excess TMCS (washing process).

The final step in manufacturing an aerogel is drying (drying process). As shown in Table 3 below, the drying process consists of the first to third steps and a cooling step. After being kept 4 hours at 40°C in the first step, 2 hours at 80°C in the second step, and kept 1 hour at 120°C in the third step, the aerogel was cooled with the entire heating furnace.

**Table 3**

| | STEP 1 | STEP 2 | STEP 3 | COOLING TIME |
|---|---|---|---|---|
| DRYING TEMPERATURE [°C] | 40 | 80 | 120 | FURNACE COOLING |
| DRYING TIME [HR] | 4 | 2 | 1 | |

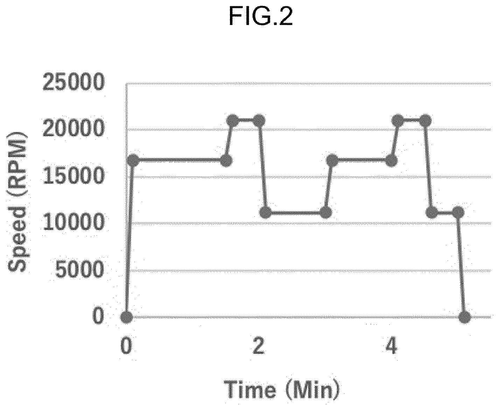

After the drying process, the aerogel sample was subjected to high-speed crushing (crushing process). A crushing program of about 5 minutes at a high speed of 11200 rpm to 21000 rpm was conducted three times using a Wonder Crusher WC-3 from Osaka Chemical Co., Ltd. corresponding to a fine crusher, as illustrated in FIG. 2.

Note that it is virtually difficult to completely distinguish gelling from aging, and that aggregation of fine particles proceeds simultaneously with gelling, resulting in proceed of a reaction similar to aging. While the temperature of the alkosol is raised from room temperature to 60°C in order to promote aging, the temperature of the alkosol may be kept at room temperature in applications where fine particles are desirable. Further, the aging process may be conducted in a short time of about from 1 second to 1 minute, which cannot be clearly distinguished from the gelling process.

Next, weakly bonded aerogel ultrafine particle of the present invention after high-speed crushing will be described.

The individual ultrafine particle aerogel powder of the present invention has a three-dimensional network structure. While related art aerogel powder particles have a three-dimensional network structure, the ultrafine particle aerogel powder of the present invention is different in unit constituting the framework. That is, as paragraph 0033 of PTL 1 describes "it is considered that aerogel particles 1 are in the form of secondary particles constituted by a plurality of primary particles", the related art three-dimensional network structure of aerogel powder particles is consisted by secondary particles as a unit. In contrast, the ultrafine particle aerogel powder of the present invention is characterized in that the unit constituting the framework thereof is primary particles.

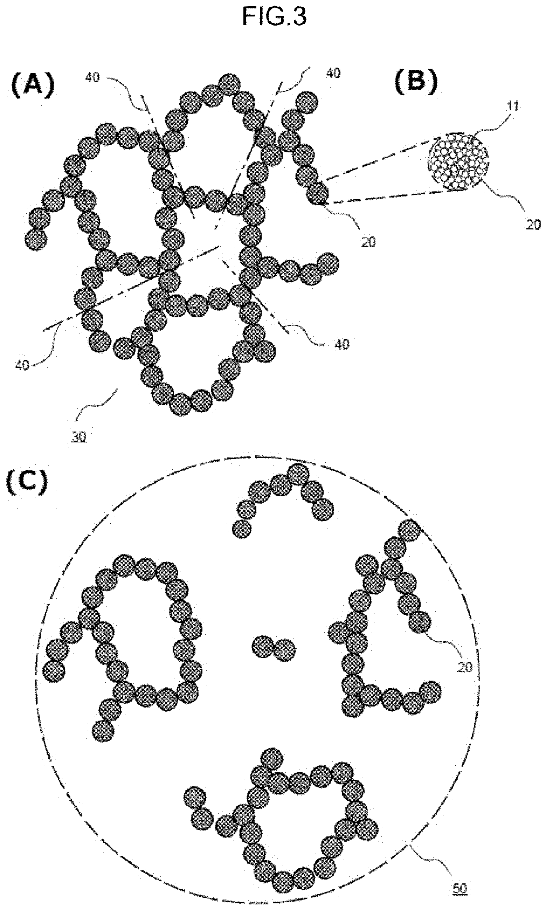

FIG. 3 is an explanatory diagram schematically illustrating a general aerogel and a structure of aerogel powder formed by crushing the general aerogel. FIG. 3(A) schematically illustrates a structure of a general aerogel 30 and a cut surface 40 when the general aerogel 30 is crushed. FIG. 3(B) schematically illustrates secondary particles 20 constituting the framework of the three-dimensional network structure. FIG. 3(C) schematically illustrates aerogel powder 50 manufactured by crushing the aerogel 30 of FIG. 3(A).

As illustrated in FIG. 3(A), in the general aerogel 30, colloid contained in the gel before drying has become the secondary particles 20, resulting in a three-dimensional network structure 30 with the secondary particle 20 as a framework unit. In the thus manufactured aerogel, the framework occupies about 10% of the volume of the three-dimensional network structure, and other about 90% are occupied by pores. When the size of the pore is smaller than the mean free path of the gas filling the pores such as air, thermal conduction due to the collision of gas molecules hardly occurs. Therefore, an aerogel is used as a thermal-insulating material.

FIG. 3(C) schematically illustrates the structure of aerogel powder 50 when a general aerogel is crushed. When crushing the general aerogel illustrated in FIG. 3(A), the cut surface 40 by the crusher is not the secondary particles 20 itself, but an area where the secondary particles are connected. This is considered to be because, as illustrated in FIG. 3(B), the secondary particles are strongly bonded as the primary particles are densely aggregated and the bond between the secondary particles is much weaker. The result is that the aerogel powder 50 obtained by crushing the general aerogel has a three-dimensional network structure of which framework is constituted by the secondary particles 20 (FIG. 3(C)).

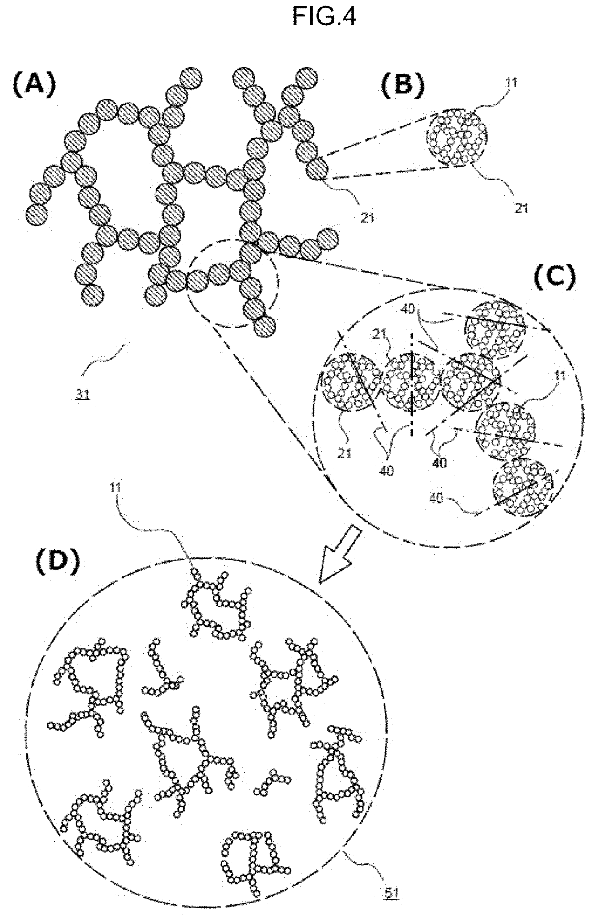

FIG. 4 is an explanatory diagram schematically illustrating a structure of an aerogel 31 of the present invention and ultrafine particle aerogel powder 51 manufactured by crushing the aerogel 31. FIG. 4(A) schematically illustrates the three-dimensional network structure of the aerogel 31 formed after the aging process in the process of manufacturing the ultrafine particle aerogel powder 51 of the present invention, FIG. 4(B) schematically illustrates a secondary particle 21 constituting a framework of the three-dimensional network structure of the aerogel illustrated in FIG. 4(A). FIG. 4(C) schematically illustrates a cut surface 40 when the aerogel 31 illustrated in FIG. 4(A) is crushed. FIG. 4(D) schematically illustrates the ultrafine particle aerogel powder 51 of the present invention.

In the present invention, an aerogel is manufactured with shorter aging time than in general processes. The three-dimensional network structure of the resulting aerogel 31 will be formed with the secondary particles 21 (FIG. 4(B)) in which primary particles 11 are less densely aggregated than in the related art primary particles as a framework (FIG. 4(A)). When an aerogel with such a three-dimensional network structure 31 (FIG. 4(A)) is subject to ultrafast crushing, it is considered that the secondary particles 21 themselves are crushed since a cut surfaces 40 by the crusher are present not only in the mutual bonding portion of the secondary particles 21 constituting the framework, but in the secondary particles 21 itself as illustrated in FIG. 4(C). As a result, the ultrafine particle aerogel powder 51 of the present invention has a three-dimensional network structure in which the framework is formed by the primary particles 11 as illustrated in FIG. 4(D). Although an outer edge of the actual secondary particle 21 is unclear since the secondary particle 21 is constituted by the less densely aggregated primary particles 11 as illustrated in FIG. 4(B),the portion corresponding to the outer edge of the secondary particle 21 is depicted by a circle of dashed line in Fig. 4(C).

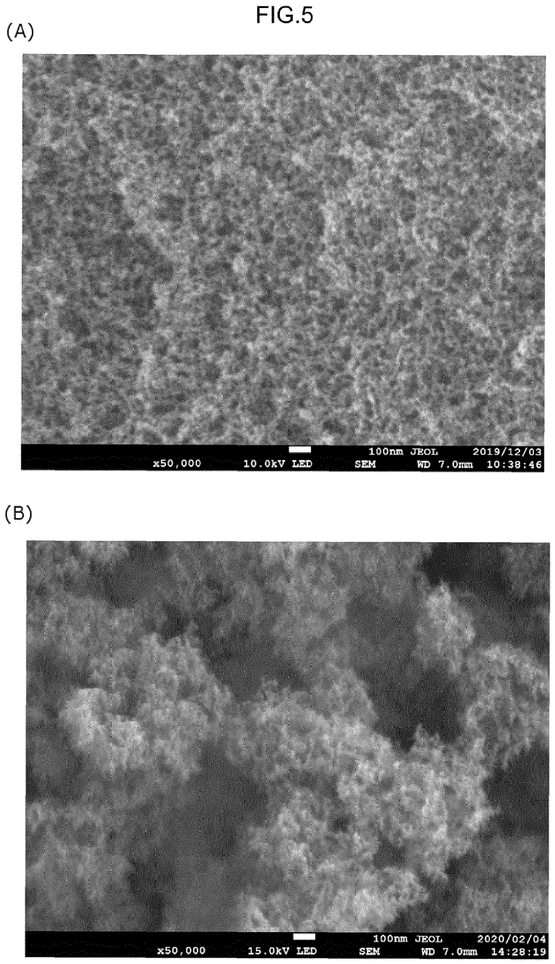

FIG. 5(A) is an SEM image of a commercially available aerogel, and FIG. 5(B) is an SEM image of weakly bonded aerogel ultrafine particle, which is an embodiment of the present invention.

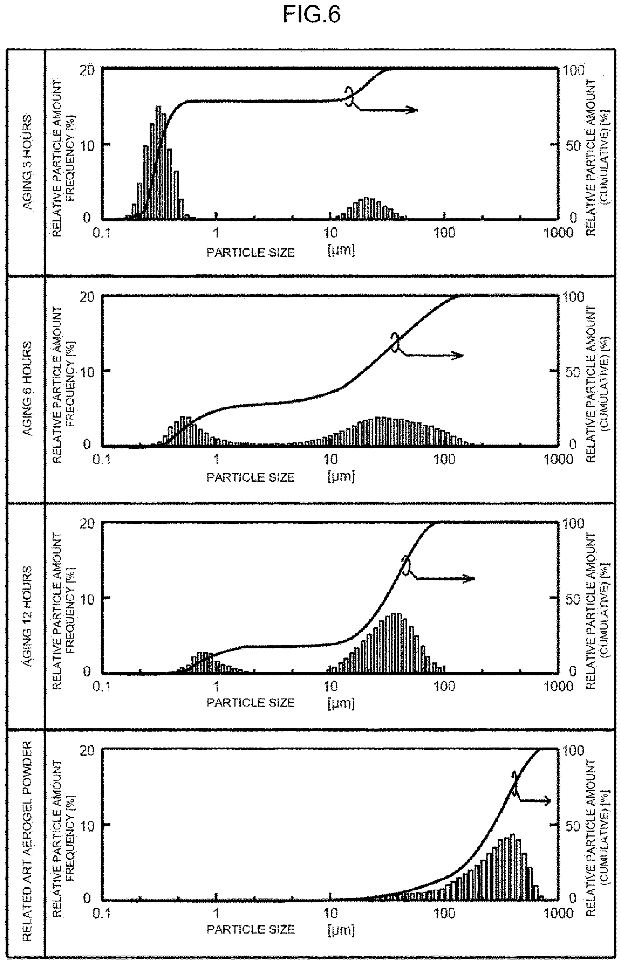

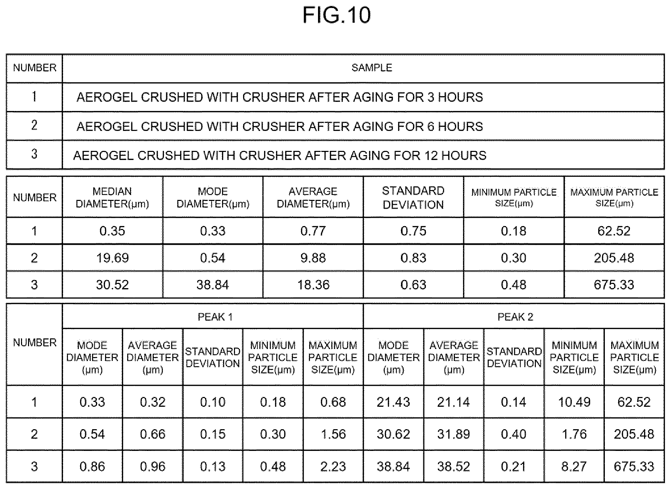

FIG. 6 is a distribution diagram illustrating particle size distribution after the high-speed crushing process. FIG. 10 illustrates numerical data of particle size distribution data of weakly bonded aerogel ultrafine particle, which is an embodiment of the present invention illustrated in FIG. 6. For each sample of an aging time of 3 hours, 6 hours, and 12 hours, the particle size after the high-speed crushing process is plotted on the horizontal axis in the log scale, and the frequency of the relative particle amount (the left vertical axis) and the cumulative value of the relative particle amount (the right vertical axis) are shown. Data from the related art (commercially available) aerogel powder is given for comparison. Here, the particle size is observed by PSD measurement. More specifically, FIG. 6 shows the results of measurement using Laser Diffraction Particle Size Analyzer SALD-2300 from Shimadzu Corporation. It should be noted that not only the diameter of the particles themselves but also the aggregation of the particles is observed as the particle size in the PSD measurement, so the measurement values are biased positively (i.e., errors often occur in which values larger than true values are measured). However, sufficient information is obtained to explain the characteristics of the weakly bonded aerogel ultrafine particle of the present invention as described below.

In the related art aerogel powder, the relative particle amount has a single peak with an average particle size being about 300 µm. In contrast, in the weakly bonded aerogel ultrafine particle of the present embodiment, each of the samples aged 3 hours, 6 hours, and 12 hours, the frequency of the relative particle amount after the high-speed crushing process has two peaks in bimodal distribution. In the sample aged 3 hours, the first peak is an average of 0.32 µm, a standard deviation of 0.10, and a second peak is an average of 21.14 µm, a standard deviation of 0.14; in the sample aged 6 hours, the first peak is an average of 0.66 µm, a standard deviation of 0.15, and a second peak is an average of 31.89 µm, a standard deviation of 0.40; and in the sample aged 12 hours, the first peak is an average of 0.96 µm, a standard deviation of 0.13, and a second peak is an average of 38.52 µm, a standard deviation of 0.21.

Having two peaks in bimodal distribution strongly suggests that there is an intrinsic difference in the particles making up each peak. This is because if there is no intrinsic change in the particles and only the size of the particles manufactured under the aging conditions changes, if the position of the peak changes with the particle size, it is unlikely that two peaks would appear. Therefore, it is natural to consider that particles constituting the second peak with a larger particle size have a three-dimensional network structure whose framework unit is the secondary particle as in the related art, while particles constituting the first peak with a smaller particle size have a three-dimensional network structure whose framework unit is the primary particle. That is, the results support the above description with reference to FIGS. 3 and 4.

Further, it is found that by changing the conditions of the aging, the properties of the particles generated after high-speed crushing can be significantly changed, i.e. controlled. The properties of the particles here may be whether the secondary particle is the constituent unit of the framework or the primary particle is the constituent unit of the framework. The mode value of the dispersion of the larger particle size is 10µm or more, and the mode value of the dispersion of the smaller particle size is 1µm or less. In the samples aged 6 hours and 12 hours followed by high-speed crushing, the sample whose cumulative value of the relative particle amount exceeds 50% is on the side of the peak of the larger particle size. In the sample aged 6 hours followed by high-speed crushing, the cumulative value of the relative particle amount exceeds 50% when the particle size is about 20 µm. In the sample aged 12 hours followed by high-speed crushing, the cumulative value of the relative particle amount exceeds 50% when the particle size is about 40 µm. Both of them are on the second peak side. In the sample aged 3 hours followed by high-speed crushing, the cumulative value of the relative particle amount exceeds 50% when the particle size is about 0.3 µm and the particle size is on the smaller peak (first peak) side.

From another point of view, it is found that in the sample in which aged 6 hours and 12 hours followed by high-speed crushing, 60% to 70% of the particles have diameters of 10 µm or more and mainly are particles having a secondary particle as a constituent unit of the framework from their size, whereas in the sample of the ultrafine particle aerogel powder of the present embodiment aged 3 hours, about 80% of the particles have a diameters in the range of 0.1 µm and 1.0 µm, i.e., from their size, and mainly are particles having a primary particle as a constituent unit of the framework.

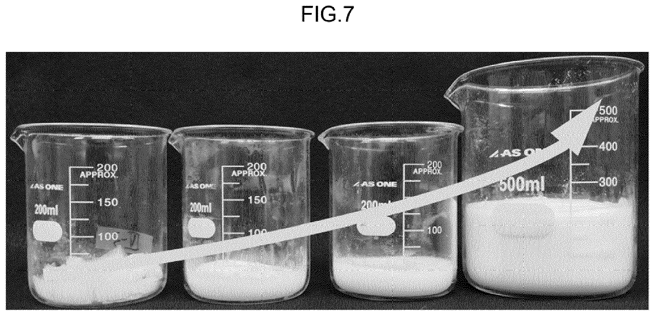

FIG. 7 is an image illustrating the bulk of the weakly bonded aerogel ultrafine particle of the present embodiment, in which an aerogel weighing 5 g is contained in a beaker with a volume of 200 cc or 500 cc. From the left, a sample of commercially available aerogel, a sample of ultrafine particle aerogel powder aged 12 hours, a sample of ultrafine particle aerogel powder aged 6 hours, and a sample of ultrafine particle aerogel powder aged 3 hours are shown. The sample of ultrafine particle aerogel powder is that described in FIG. 6. When the aging time is as short as 3 hours, the bulk of the ultrafine particle aerogel powder increases more than 10 times that of the commercially available aerogel.

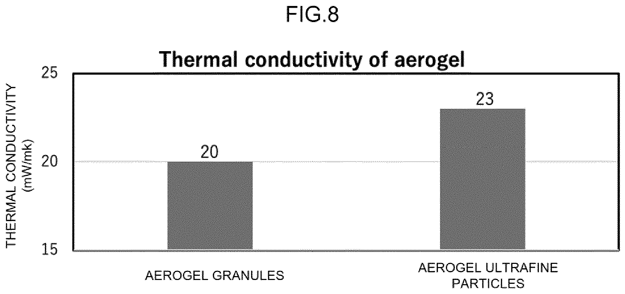

FIG. 8 is a diagram for comparing thermal conductivity of a commercially available aerogel and thermal conductivity of weakly bonded aerogel ultrafine particle. The commercially available aerogel granule has thermal conductivity of 20 [mW/mK]. In contrast, the weakly bonded aerogel, which is an embodiment of the present invention, has thermal conductivity of 23 [mW/mK].

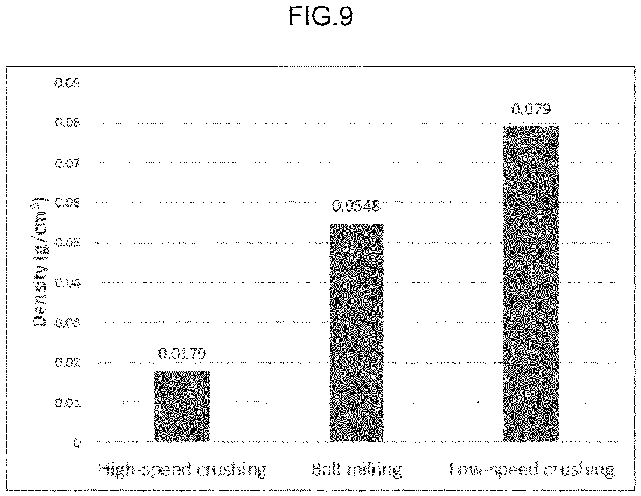

FIG. 9 is a diagram illustrating a difference in density of aerogel powder in different crushing mechanisms, illustrating high-speed crushing and ball milling as the embodiments of the present invention, and low-speed crushing as a comparative example.

As illustrated in FIG. 9, the density in the high-speed crusher was measured to be 0.0179 g/cm³. The density in the ball milling was measured to be 0.0548 g/cm³. The density in the low-speed crusher as a comparative example was measured to be 0.0790 g/cm³. This means that, by crushing with a high-speed crusher, the bulk density of the ultrafine particle aerogel powder can be lowered.

### [Second Embodiment]

### < Weakly Bonded Aerogel Ultrafine Particle with Added Hollow Particles>

The ultrafine particle aerogel powder of the first embodiment may further include hollow particles. This can lower thermal conductivity of the thermal-insulating material.

When an aerogel is used as a thermal-insulating material, since the size of the pore in the aerogel is smaller than the mean free path of air, thermal conduction caused by collision of gas molecules or convection of gas is suppressed, and thermal insulation performance close to the case where the pore is a vacuum is expected. In reality, however, the performance of a vacuum is not attained. The present inventors studied the cause and found that the thermal-insulating material filled with aerogel powder has fine communication holes left, through which thermal conduction as described above is caused. Therefore, the inventors have created a technique to lower thermal conductivity by adding hollow particles to the aerogel and hybridize the same (Patent application as Japanese Patent Application No. 2020-120921). Since the added hollow particles block the above-described fine communication holes, suppressing thermal conduction slightly caused by gas, it is possible to lower thermal conductivity.

Since the spherical shell constituting the hollow particle is highly airtight, by enclosing gas of lower thermal conductivity than air in the spherical shell, it is possible to further lower thermal conductivity of the thermal-insulating material.

Although not particularly limited, the hollow particles to be added may be nano-size hollow particles, micro-size hollow particles, or both of them. The nano-size hollow particles are preferably manufactured to have an outer diameter of 30 nm or more and 360 nm or less, and a spherical shell thickness of 7.5 nm or more and 65 nm or less. The outer diameter corresponds to a range of about 1/2 to about 5 times the mean free path of air at room temperature and pressure. As described above, since the hollow size is prepared on the same order as the mean free path of air, the nano-size hollow particles have large contribution to the thermal insulation effect when added to an aerogel. The micro-size hollow particles preferably manufactured to have an outer diameter of 1 µm or more and 23 µm or less, and a thickness of the spherical shell of 0.35 µm or more and 3 µm or less. The outer diameter is larger than 15 times the mean free path of air at room temperature and pressure, having an effect of increasing the structural strength of the network while contributing to the thermal insulation effect. Although an aerogel has fine communication holes left as described above, the added hollow particles block the communication holes and suppress thermal conduction through gas such as convection generated through the communication holes, it is possible to increase the thermal insulation effect.

Nano-size hollow particles can be manufactured, for example, by the soft-template method. The surface of the polymer electrolyte is modified with ammonia in ethanol and coated with silica (SiO₂) to generate particles consisting of a core and a spherical shell. The particles are washed or sintered to remove a medium enclosed in the core to generate a hollow particle.

Micro-size hollow particles are desirably manufactured by a double emulsion method, for example. From a dispersive multiphase system consisting of an immiscible liquid of an oil phase containing a surfactant and an aqueous phase containing a precursor and a surfactant, the oil phase is emulsified into a continuous phase, an emulsion containing droplets centered on the aqueous phase is formed, and an aqueous phase is added thereto to obtain an emulsion which has an aqueous continuous phase and contains droplets centered on a gel. Micro-size hollow particles are manufactured by washing/filtering or sintering the particles.

In the process of manufacturing the ultrafine particle aerogel powder of the present invention, the hollow particles may be added to a mixture of TEOS and methanol prepared as a silica precursor (mixing process) prior to the gelling process in the manufacturing process diagram illustrated in FIG. 1. After addition of hollow particles, the mixture may be stirred thoroughly by ultrasonic vibration so that added hollow particles are dispersed uniformly. The amount of hollow particles to add is adjusted, for example, to achieve the following composition relative to the entire hybridized aerogel.

The nano-size hollow particles are preferably from 0.01% to 30% by weight, more preferably from 0.10% to 15% by weight, and most preferably from 1.00% to 10% by weight. Similarly, the micro-size hollow particles are preferably from 0.01% to 30% by weight, more preferably from 0.10% to 15% by weight, and most preferably from 1.00% to 10% by weight.

As described in Second Embodiment, thermal conductivity of the thermal-insulating material can be lowered by adding hollow particles to the ultrafine particle aerogel powder.

In the embodiment of a method for manufacturing weakly bonded aerogel ultrafine particle or a method for manufacturing weakly bonded aerogel ultrafine particle hybridized with hollow particles of the present invention, a case in which silica aerogel powder is manufactured has been described. The present invention, however, is not limited to the use of silica aerogels as a metal aerogel, and a metal oxide aerogel including various metal elements, i.e., at least one of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodium (Pr), holmium (Ho), or molybdenum (Mo), may be used.

In the embodiment of the thermal-insulating material of the present invention, a case in which silica aerogel powder is used has been described. The present invention, however, is not limited to the use of silica aerogels as a metal oxide aerogel, and a metal oxide including various metal elements, i.e., at least one of aluminum (Al), titanium (Ti), zirconium (Zr), hafnium (Hf), yttrium (Y), vanadium (V), cerium (Ce), lanthanum (La), neodymium (Nd), samarium (Sm), praseodium (Pr), holmium (Ho), or molybdenum (Mo), may be used.

### Industrial Applicability

The method for manufacturing weakly bonded aerogel ultrafine particle of the present invention is suitable for use in manufacturing weakly bonded aerogel ultrafine particle. The method for manufacturing weakly bonded aerogel ultrafine particle hybridized with hollow particles of the present invention is suitable for use in manufacturing weakly bonded aerogel ultrafine particle hybridized with hollow particles.

The method for manufacturing weakly bonded aerogel ultrafine particle of the present invention is suitable for use in a thermal-insulating material. Further, the weakly bonded aerogel ultrafine particle to which the hollow particles are added of the present invention is suitable for use in a thermal-insulating material.

### EXPLANATION OF SIGN

11 Primary particle
20 Secondary particle
21 Secondary particle with less densely aggregate primary particles
30 Three-dimensional network structure formed by framework with secondary particle as unit
31 Three-dimensional network structure formed by framework with secondary particle in which primary particles are less densely aggregate as unit
40 Cut surface by crusher
50 General aerogel powder
51 Ultrafine particle aerogel powder of the present invention

## Claims

1. A method for manufacturing weakly bonded aerogel ultrafine particle comprising:
a mixing process of mixing a metal alkoxide with a solvent to form a sol on hydrolysis;
a gelling process of gelling the sol obtained in the mixing process;
an aging process of aging the gel obtained in the gelling process to obtain a wet gel;
a solvent exchanging process of replacing the solvent of the wet gel with a predetermined replacement solvent,
a modifying process of modifying a surface of a network structure with a predetermined organic group;
a process of washing the modified wet gel obtained in the wet gel generating process;
a process of drying the washed and modified wet gel; and
a process of crushing the dried wet gel.

2. The method for manufacturing weakly bonded aerogel ultrafine particle according to claim 1, wherein the metal of the metal alkoxide includes at least one of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).

3. The method for manufacturing weakly bonded aerogel ultrafine particle according to claim 1, wherein
the metal alkoxide is a silicon alkoxide, and
in the gelling process, an acid catalyst and a base catalyst are added to a mixture of the silicon alkoxide and the solvent.

4. The method for manufacturing weakly bonded aerogel ultrafine particle according to claim 1, wherein
the metal alkoxide is a silicon alkoxide, and
in the aging process, the aging temperature is 15°C or higher and 70°C or lower, and the aging time is longer than 0 hours and 24 hours or shorter.

5. The method for manufacturing weakly bonded aerogel ultrafine particle according to claim 1, wherein
the metal alkoxide is a silicon alkoxide, and
in the modifying process, the reactive group to modify the surface of the network structure includes one or two or more of halogen, amino group, imino group, carboxyl group, alkoxy group, hydroxyl group, alkyl group, phenyl group, a fluoride of alkyl group, and fluoride of phenyl group.

6. The method for manufacturing weakly bonded aerogel ultrafine particle according to claim 5, wherein in the modifying process, the compound to be added as a reagent having the reactive group is hexamethyldisilazane, hexamethyldisiloxane, trimethylchlorosilane, trimethylmethoxysilane, trimethylethoxysilane, triethylethoxysilane, triethylmethoxysilane, dimethyldichlorosilane, dimethyldiethoxysilane, methyltrichlorosilane, ethyltrichlorosilane, acetic acid, formic acid, succinic acid, and methyl chloride.

7. The method for manufacturing weakly bonded aerogel ultrafine particle according to claim 6, wherein in the washing process of the wet gel, the wet gel that has been subject to the modifying process is washed with the washing liquid so as to remove the reagent having the reactive group from the gel.

8. The method for manufacturing weakly bonded aerogel ultrafine particle according to claim 1, wherein
the metal alkoxide is a silicon alkoxide, and
the drying process is conducted at the atmospheric pressure.

9. The method for manufacturing weakly bonded aerogel ultrafine particle according to claim 8, wherein in the crushing process, in the weakly bonded aerogel, the aerogel is crushed so that the aerogel particles in which the primary particles are framework units are included at 50% or more and the rest is the aerogel particles in which the secondary particles are framework units.

10. A method for manufacturing weakly bonded aerogel ultrafine particle hybridized with hollow particles, wherein
in the method for manufacturing weakly bonded aerogel ultrafine particle according to claim 1, further comprising,
between the mixing process and the gelling process, a process of adding hollow particles to the mixture of the metal alkoxide and the solvent in the mixing process.

11. A method for manufacturing weakly bonded aerogel ultrafine particle hybridized with hollow particles, wherein
in the method for manufacturing weakly bonded aerogel ultrafine particle according to any one of claims 3 to 9, further comprising,
between the mixing process and the gelling process, a process of adding hollow particles to the mixture of the silicon alkoxide and the solvent prepared as a silica precursor in the mixing process.

12. The method for manufacturing weakly bonded aerogel ultrafine particle hybridized with the hollow particles according to claim 10 or 11, wherein
the hollow particles include at least one of
nano-size hollow particles with an outer diameter of 30 nm or more and 360 nm or less, and a spherical shell thickness of 7.5 nm or more and 65 nm or less, and
micro-size hollow particles with an outer diameter of 1 µm or more and 23 µm or less, and a spherical shell thickness of in the range of 0.35 µm or more and 3µm or less.

13. A thermal-insulating material, wherein the thermal-insulating material is made from an aerogel having a three-dimensional network structure with a framework constituted by a cluster of aggregation of primary particles; and the thermal-insulating material comprises fine particles having a three-dimensional network structure with a framework of the primary particles.

14. The thermal-insulating material according to claim 13, wherein the primary particle is a metal oxide and the metal of the metal oxide is an oxide of at least one of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).

15. The thermal-insulating material according to claim 13, wherein 50% or more of the total number of the fine particles is dispersed with a mode value at the particle size of 0.1µm or more and 1.0µm or less.

16. The thermal-insulating material according to claim 13, further comprising hollow particles.

17. The thermal-insulating material according to claim 16, wherein the hollow particles may include at least one of nano-size hollow particles of 30 nm or more and 360 nm or less in outer diameter and micro-size hollow particles of 1 µm or more and 23 µm or less in outer diameter.

18. The thermal-insulating material according to claim 16, wherein the hollow particle has a shell and gas of thermal conductivity lower than that of air is enclosed in a hollow portion inside the shell.
